Europäisches Patentamt

European Patent Office

Office européen des brevets

(11) Veröffentlichungsnummer: **0 143 070**

**A1**

(12) ## EUROPÄISCHE PATENTANMELDUNG

(21) Anmeldenummer: 84730109.0

(22) Anmeldetag: 12.10.84

(51) Int. Cl.⁴: **G 02 F 1/015**
**H 01 L 31/12, G 02 B 6/12**

(30) Priorität: 13.10.83 DE 3337492

(43) Veröffentlichungstag der Anmeldung:
29.05.85 Patentblatt 85/22

(84) Benannte Vertragsstaaten:
AT BE CH DE FR GB IT LI LU NL SE

(71) Anmelder: Heinrich-Hertz-Institut für
Nachrichtentechnik Berlin GmbH
Einsteinufer 37
D-1000 Berlin 10(DE)

(72) Erfinder: Nolting, Hans-Peter, Dr. Ing.
Ringslebenstrasse 68
D-1000 Berlin 47(DE)

(72) Erfinder: Krauser, Jürgen, Dr. Ing.
Parkstrasse 4 c
D-1000 Berlin 28(DE)

(72) Erfinder: Albrecht, Peter, Dipl.-Ing.
Strasse 231, Nr. 45
D-1000 Berlin 47(DE)

(72) Erfinder: Bornholdt, Carsten, Dipl.-Ing.
Suarezstrasse 7
D-1000 Berlin 19(DE)

(72) Erfinder: Kaumanns, Roland, Dipl.-Phys.
Wittstocker Strasse 8
D-1000 Berlin 21(DE)

(72) Erfinder: Schlak, Michael, Dipl.-Phys.
Wilhelmshavener Strasse 29
D-1000 Berlin 21(DE)

(74) Vertreter: Wolff, Konrad
Heinrich-Hertz-Institut für Nachrichtentechnik Berlin
GmbH Einsteinufer 37
D-1000 Berlin 10(DE)

(54) **Elektro-optisches Halbleiter-Bauelement mit einer Lichtwellen führenden Schicht und seine Verwendung als elektro-optischer Modulator.**

(57) Elektro-optisches Halbleiter-Bauelement mit einer Lichtwellen führenden Schicht und seine Verwendung als elektro-optischer Modulator.

Bauelemente der integrierten Optik lassen sich in ihren Eigenschaften durch die Wahl der chemischen Zusammensetzung des Materials, durch Dotierung und Strukturierung maßgeblich beeinflussen. Von außen angelegte elektrische Felder verändern z.B. auch die optischen Eigenschaften des Materials.

Ist die Photonenenergie einer geführten Lichtwelle größer als der Bandabstand, überdeckt der Franz-Keldysh-Effekt (Elektroabsorption) andere Erscheinungen. Im Übergangsbereich zum transparenten Bereich sind ein starker quadratischer elektro-optischer (Kerr-) Effekt und ein linearer (Pockels-) Effekt bereits festgestellt worden.

Die Erfindung befaßt sich mit der Ausnutzung von Pokkels- und Kerr-Effekt für amplitudenunabhängig durchzuführende Änderungen. Um einen spürbaren Einfluß des Kerr-Effektes ausnutzen zu können, muß die Ausbreitungsrichtung der im Material geführten Lichtwelle in Bezug auf die Orientierung des Materials richtig gewählt werden. Wesentlich ist außerdem, daß der Bandabstand des Materials gegenüber der Photonenenergie so groß gehalten wird, daß noch keine spürbare Elektroabsorption auftritt. Diese Differenz liegt vorzugsweise für InGaAsP-Material zwischen 0,25 eV und 0,35 eV.

Fig.4

HEINRICH-HERTZ-INSTITUT FÜR NACHRICHTENTECHNIK BERLIN
GMBH                                             11/1083 EP

Elektro-optisches Halbleiter-Bauelement mit einer
Lichtwellen führenden Schicht und seine Verwendung als
elektro-optischer Modulator

Die Erfindung bezieht sich auf ein elektro-optisches
Halbleiter-Bauelement mit einer Lichtwellen führenden
Schicht, deren Orientierung in Ausbreitungsrichtung der
geführten Lichtwelle zur Addition von Pockels und Kerr-
Effekt führt, sowie auf die Verwendung eines solchen
Bauelements als elektro-optischer Modulator. Dabei ist
insbesondere an Bauelemente gedacht, die in integrierter Technik herzustellen sind.

In der optischen Nachrichtentechnik gewinnen Momomode-
Systeme zunehmend an Bedeutung. Für Übertragungszwecke
verwendete Glasfasern weisen zwischen etwa 0,8 µm und
1,6 µm Lichtwellenlänge Bereiche sehr geringer Dämpfung
auf, insbesondere bei etwa 1,3 µm und 1,55 µm Lichtwellenlänge. Dementsprechend sind in optischen Nachrichtensystemen auch die dort einzusetzenden Bauelemente für die betreffende Wellenlänge auszulegen.

Auch auf anderen technischen Gebieten, z. B. in der
Rechnertechnik, kann mit elektrisch steuerbaren optischen Signalen gearbeitet werden. Hierbei werden an eine geringe Verlustleistung und eine hohe Schaltgeschwindigkeit der eingesetzten Bauelemente extreme Anforderungen gestellt.

Für spezifische Anwendungen eines Halbleiter-Bauelements lassen sich dessen Eigenschaften durch die Wahl der chemischen Zusammensetzung des Materials, durch Dotierung und Strukturierung maßgeblich beeinflussen. Für Zwecke der Signalverarbeitung hat der Bandabstand des Halbleitermaterials fundamentale Bedeutung. Ein von außen angelegtes elektrisches Feld verändert die optischen Eigenschaften des Materials z. B. bezüglich der Brechzahl.

Aus Appl. Phys. Lett. 42 (8) vom 15. April 1983, Seiten 692 bis 694 ist es bekannt, daß der lineare elektro-optische oder "Pockels"-Effekt und der quadratische elektro-optische oder "Kerr"-Effekt für Zwecke der Signalverarbeitung in Halbleiter-Bauelementen ausgenutzt werden können. Dieser Aussage lagen Beobachtungen zugrunde, bei denen die Elektroabsorption (oder "Franz-Keldysh"-Effekt) ziemlich stark war. Danach ist zu vermuten, daß Franz-Keldysh- und Kerr-Effekt auf den gleichen physikalischen Ursachen beruhen.

Hohe Elektroabsorption bedeutet, für eine sich im Material ausbreitende Lichtwelle bestimmter Wellenlänge wird unter dem Einfluß eines elektrischen, von außen angelegten Feldes das Material undurchsichtig. Auf dieser Grundlage läßt sich in letzter Konsequenz ein optischer Ein-Aus-Schalter, bei Beherrschung des Überganges zwischen Transparenz und vollständiger Dämpfung eine Amplitudenmodulation realisieren.

Der oben genannten Vorveröffentlichung ist auch zu entnehmen, daß der "Kerr"-Effekt bei größer werdender Differenz zwischen Bandabstand und Photonenenergie sehr schnell verschwindet. Bei einem Wert von etwas mehr als 0,24 eV für diese Differenz war dieser quadratische elektro-optische Effekt noch feststellbar. Weiterhin wird am angegebenen Ort auch die Abhängigkeit von "Pockels"- und "Kerr"-Effekt von der Ausbreitungsrichtung der Lichtwelle im Material behandelt. In der $\overline{1}10$ -Richtung kompensieren sich die beiden Effekte zumindest teilweise, in der $[110]$-Richtung hingegen addieren sie sich.

Hiervon ausgehend zielt die Erfindung darauf ab, ein Bauelement für die elektrische Beeinflussung von geführten Lichtwellen zu schaffen, wobei in erster Linie nicht die Amplitude, sondern insbesondere amplitudenunabhängige Änderungen, also z. B. Phasenlage und Polarisationsrichtung elektrisch steuerbar sein sollen. Voraussetzung hierfür ist nun allerdings, daß derartige Änderungen erfolgen, ohne das transparente Regime spürbar zu verlassen.

Dies wird gemäß der Erfindung erreicht durch eine transparente Mischkristallschicht mit einem Bandabstand $E_g$, der gegenüber der Photonenenergie $E_{ph}$ so groß ist, daß noch keine spürbare Elektroabsorption auftritt.

Während im transparenten Regime der lineare elektro-optische Effekt den quadratischen völlig überdeckt, bei hoher Dämpfung hingegen der quadratische Effekt zwar großen Einfluß hat, jedoch infolge der hohen Dämpfung für amplitudenunabhängig durchzuführende Beeinflussungen nicht ausgenutzt werden kann, hat sich überraschenderweise herausgestellt, daß es einen Zwischenbereich gibt, bei dem die Dämpfung bzw. die Elektroabsorption noch nicht schädlich und der Kerr-Effekt schon ausnutzbar stark ist. Dieser Zwischenbereich läßt sich durch die Differenz zwischen Bandabstand $E_g$ des betreffenden Materials und Photonenenergie $E_{ph}$ der geführten Lichtwelle vorgegebener Wellenlänge definieren.

Bezüglich der Richtung der Wellenausbreitung und der Orientierung des Materials ist unbedingt darauf zu achten, daß sich Pockels- und Kerr-Effekt addieren. Der Pockels-Effekt ändert sich, seinem Betrage nach, im Bereich der Differenz zwischen Bandabstand $E_g$ und Photonenenergie $E_{ph}$, in dem der Erfindung entsprechend gearbeitet werden soll, fast nicht, der Kerr-Effekt hingegen etwa um den Faktor 2. Ausgehend vom Pockels-Effekt trägt der Kerr-Effekt hier betragsmäßig zu etwa 20 % bis 40 % zu entsprechenden Änderungen optischer Eigenschaften unter dem Einfluß eines von außen angelegten elektrischen Feldes bei. Das heißt, bei richtiger Wahl von Ausbreitungsrichtung der Lichtwelle zur Orientierungsrichtung des Materials ist die Wirkung gegenüber falsch gewählter Richtung rund doppelt so groß.

Ausführungsformen der Erfindung betreffen bevorzugt das Materialsystem der III-V-Verbindungen. Dieses Materialsystem tritt gegenüber Silizium immer mehr in den Vordergrund, da die Möglichkeiten, die Eigenschaften von Halbleiter-Bauelementen zu beeinflussen, beträchtlich erweitert werden.

Besonders geeignet für nachrichtentechnische Zwecke und dort auch im Hinblick auf die Herstellung von integrierten opto-elektronischen Bauelementen sind Mischkristalle im InGaAsP-Materialsystem.

Untersuchungen an solchen Mischkristallen im Zusammenhang mit der Erfindung haben ergeben, daß für diese die
Differenz zwischen Bandabstand $E_g$ und Photonenenergie
$E_{ph}$ zwischen 0,25 eV und 0,35 eV betragen sollte. Wird
die Differenz größer als 0,35 eV, liefert der Kerr-
Effekt sehr schnell immer geringer werdende Beiträge
gegenüber dem Pockels-Effekt. Entfallen nämlich auf den
linearen Effekt mehr als 90 % der Gesamtwirkung, überdeckt dieser also den quadratischen elektro-optischen
Effekt mehr und mehr. Dann spielt auch die gewählte
Orientierung des Materials bezüglich der Ausbreitungsrichtung der geführten Lichtwelle keine maßgebende Rolle mehr. Auf der anderen Seite, das heißt bei Differenzen zwischen Bandabstand $E_g$ und Photonenenergie $E_{ph}$
kleiner als 0,25 eV, wird zwar der Kerr-Effekt zunehmend stärker, aber die Elektroabsorption nimmt zu und
der transparente Bereich wird verlassen.

Im angegebenen Bereich, in dem bei Ausführungsformen
der Erfindung gearbeitet wird, ergibt sich für das Material z. B. eine Zusammensetzung eines Mischkristalls
$In_xGa_yAs_{1-x}P_{1-y}$ mit x = 0,0439 und y = 0,0968. Hierbei
entspricht einer Arbeitswellenlänge $\lambda_A$ = 1,3 µm eine
Photonenenergie von 0,95 eV. Mit einer mittleren Differenz von 0,3 eV gegenüber dem Bandabstand $E_g$ folgt
für diesen also 1,25 eV oder entsprechend für die Bandkante der Mischkristallschicht eine Wellenlänge
$\lambda_Q$ = 0,99 µm.

Ein Lichtwellenleiter, der als bevorzugte Ausführungsform der Erfindung im InGaAsP-Materialsystem hergestellt wird, weist eine Doppel-Heterostruktur auf, bei der das Substrat (OO1)-orientiert ist und die Lichtwellenausbreitung in der transparenten Mischkristallschicht in der [110]-Richtung liegt. Diese Anweisung ist insoweit auch der eingangs erwähnten Vorveröffentlichung (Appl. Phys. Lett. 42 (8), 1983, S. 692/694) zu entnehmen. Ergänzend dazu kann zur näheren Beschreibung noch die Ätzvorschrift angegeben werden: mit $CH_3 \cdot COOH:HBr$ (3:1) bilden sich nach 1 Minute elliptische Ätzgruben aus. Die [110]-Richtung liegt dort dann in Richtung der kleinen Halbachsen der elliptischen Ätzgruben.

Gemäß der Erfindung findet ein Bauelement mit seinen oben erwähnten Merkmalen bevorzugt Verwendung als elektro-optischer Modulator. Da die Änderungen optischer Eigenschaften unter dem Einfluß eines von außen angelegten elektrischen Feldes nahezu unabhängig von der Amplitude der geführten Lichtwelle erfolgen, kann z. B. unmittelbar eine Phasenmodulation durchgeführt werden.

In der Zeichnung sind zur näheren Erläuterung der Erfindung einige Zusammenhänge physikalischer Eigenschaften von Ausführungsformen der Erfindung schematisch dargestellt. Dabei zeigen:

Fig. 1: ein Schaubild für die Elektroabsorption $\alpha [cm^{-1}]$ bei verschiedenen Feldstärken $[V/cm]$ bzw. Spannungen $U_{BIAS} [V]$, bezogen auf die Differenz zwischen Bandabstand $E_g$ und Photonenenergie $E_{ph} [eV]$ ;

Fig. 2: ein Schaubild für den Verlauf der Koeffizienten $|r_{41}|$ $[10^{-10}$ V/cm] des Pockels - und $|R_{12}-R_{11}|$ $[10^{-16}V^2/cm^2]$ des Kerr-Effektes als Funktion der Differenz von Bandabstand $E_g$ und Photonenenergie $E_{ph}$ [eV] ;

Fig. 3: den Verlauf einer Phasendrehung $\Delta\phi$ $[^O/mm]$ bei verschiedenen Wellenlängen $\lambda_A$[µm ] einer geführten Lichtwelle infolge Pockels-und Kerr-Effekt, bezogen auf die Spannung $U_{BIAS}$[V] eines von außen angelegten elektrischen Feldes für ein spezifisches Bauelement,

und Fig. 4: eine schematische Darstellung eines erfindungsgemäßen Bauelements.

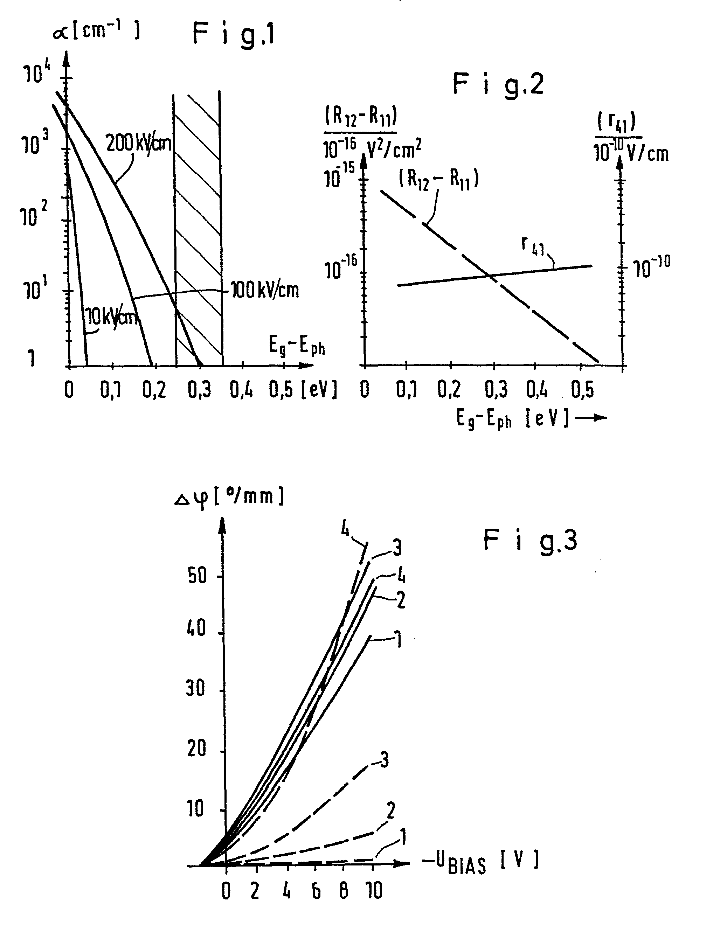

Der Fig. 1 ist zu entnehmen, daß bei einem Halbleitermaterial, hier dargestellt für GaAs bzw. InGaAsP, mit wachsenden Feldstärken - angegeben sind 10, 100 und 200 kV/cm - die Absorption $\alpha$[$cm^{-1}$] sich mehr und mehr in den an sich transparenten Bereich des Materials verschiebt. Den Feldstärken von 10, 100 und 200 kV/cm entsprechen fast genau angelegte Spannungen - $U_{BIAS}$ von 1, 10 bzw. 20 V. Wesentlich höhere Spannungen als - 20 V bzw. Feldstärken als 200 kV/cm führen bei dem Material zu Schädigungen.

Für eine Differenz von 0,25 eV bis 0,35 eV zwischen Bandabstand $E_g$ des Materials und Photonenenergie $E_{ph}$ der im Material geführten Welle ist ein schraffierter Bereich angegeben, in dem Feldstärken von weniger als ca. 150 kV/cm noch keine, solche von 200 kV/cm und etwas höher eine, allerdings sehr geringe Elektroabsorption bewirken.

Die Fig. 2 zeigt den Verlauf der Koeffizienten $r_{41}$ des Pockels- und $(R_{12}-R_{11})$ des Kerr-Effektes im selben Wellenlängenbereich des Mischkristalls. Dort ist für Differenzen zwischen Bandabstand $E_g$ und Photonen-energie $E_{ph}$ größer 0,1 bis ca. 0,5 eV der Betrag $|r_{41}|$ für den Pockels-Effekt nahezu konstant, der Betrag $|R_{12}-R_{11}|$ für den Kerr-Effekt-Koeffizienten ändert sich hingegen hier über etwa zwei Zehnerpotenzen.

Die Fig. 3 zeigt für einen Wellenleiter mit einer $n^-$-Q-Schicht (Dotierung: $N^- = 2,2 \cdot 10^{16} cm^{-3}$, Schichtdicke: $t = 1,2 \mu m$) auf einem $n^+$-InP-Substrat sowie mit einer $p^+$-InP-Schicht (Dotierung: $p^+ = 2 \cdot 10^{18} cm^{-3}$) als Abdeckung für 4 verschiedene Arbeitswellen-längen $\lambda_A$ den Verlauf einer Phasendrehung $\Delta\phi$ $[^O/mm]$ in-folge Pockels- (durchgezogenen Kurven) und Kerr-Effektes (gestrichelte Kurven). Der Bandabstand $E_g$ der qua-ternären Schicht Q hatte den Wert 1,28 eV. Die Wellen-längen $\lambda_A$ betrugen:

| Nr. | $\lambda_A$ $|\mu m|$ |
|---|---|
| 1 | 1,510 |
| 2 | 1,292 |
| 3 | 1,154 |
| 4 | 1,064 |

Es wurden für die Erzeugung eines elektrischen Feldes Spannungen $U_{BIAS}$ bis - 10 V angelegt.

Für die Wellenlänge $\lambda_A = 1,510$ um beträgt die Photo-nenenergie $E_{ph} = 0,82$ eV. Dementsprechend ergibt sich für die Differenz $E_g - E_{ph} = 1,28$ eV $- 0,82$ eV $= 0,46$ eV, also ein Wert, mit dem bei Ausführungsformen nicht gearbeitet werden soll. Aus den Verläufen - mit 1 bezeichnet - der Phasendrehungen $\Delta\phi$ ist zu entnehmen, daß der wesentliche Anteil auf dem Pockels-Effekt beruht und der auf den Kerr-Effekt entfallende Anteil vernachlässigbar ist.

Für die Wellenlänge $\lambda_A = 1,292$ µm beträgt die Photonenenergie $0,96$ eV, die Differenz $E_g - E_{ph} = 1,28$ eV $- 0,96$ eV $= 0,32$ eV. Dieser Bereich kommt für Ausführungsformen der Erfindung in Betracht. Es ist auch zu erkennen, daß der auf den Kerr-Effekt entfallende Anteil gegenüber dem des Pockels-Effektes durchaus ins Gewicht fällt.

Bei der Wellenlänge $\lambda_A = 1,154$ µm ist die Photonenenergie $E_{ph} = 1,07$ eV, die Differenz $E_g - E_{ph} = 1,28$ eV $- 1,07$ eV $= 0,21$ eV. Hier tritt bereits spürbare Elektroabsorption auf, so daß aus diesem Grunde ein Einsatz im Sinne der Erfindung nicht mehr ernsthaft zu erwägen ist. Dies gilt entsprechend um so mehr für die Wellenlänge $\lambda_A = 1,064$ µm, bei der $E_{ph} = 1,165$ eV, $E_g - E_{ph} = 1,28$ eV $- 1,165$ e V $= 0,115$ eV ist.

Die Kurven 4 sind aus anderen Gründen dennoch angegeben. Sie zeigen, daß Kerr- und Pockels-Effekt vergleichbar große Beiträge zur Phasendrehung $\Delta\phi$ liefern, der Kerr-Effekt bei höheren Feldstärken möglicherweise den Pockels-Effekt noch überragt. Da jedoch die Kurve 4 für den Pockels-Effekt sehr nahe bei der Kurve 2 liegt und es hierfür noch keine Erklärung gibt, ist die oben angedeutete Folgerung noch mit Vorbehalt zu verstehen.

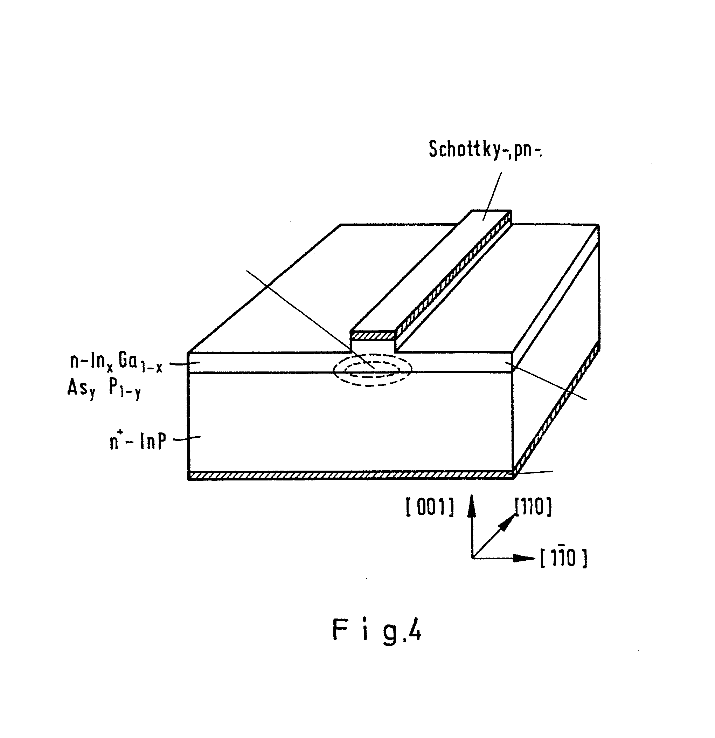

Bei dem in Fig. 4 schematisch dargestellten Bauelement ist der Streifenwellenleiter in der Mischkristallschicht angedeutet. Änderungen des über die Elektroden angelegten elektrischen Feldes führen zu einer Modulation der geführten Lichtwelle. Die Orientierungsrichtungen, insbesondere die Ausbreitungsrichtung [110], sind den angegebenen räumlichen Koordinaten zu entnehmen.

Im Zusammenhang mit einem Vortrag auf der "$2^{nd}$ European Conference on Integrated Optics" in Florenz am 17. und 18. Oktober 1983 zum Thema "Light Guiding and Electrooptical Modulation in InGaAsP/InP Double Heterostructures" wurde auch über die hier beschriebene Erfindung berichtet.

HEINRICH-HERTZ-INSTITUT FÜR NACHRICHTENTECHNIK BERLIN
GMBH

11/1083 EP

Patentansprüche

1. Elektro-optisches Halbleiter-Bauelement mit einer Lichtwellen führenden Schicht, deren Orientierung in Ausbreitungsrichtung der geführten Lichtwelle zur Addition von Pockels- und Kerr-Effekt führt,
g e k e n n z e i c h n e t   d u r c h
eine transparente Mischkristallschicht mit einem Bandabstand $E_g$, der gegenüber der Photonenenergie $E_{ph}$ so groß ist, daß noch keine spürbare Elektroabsorption auftritt.

2. Bauelement nach Anspruch 1,
g e k e n n z e i c h n e t   d u r c h
ein Mischkristall im Materialsystem der III-V-Verbindungen.

3. Bauelement nach Anspruch 2,
g e k e n n z e i c h n e t   d u r c h
ein Mischkristall im InGaAsP-Materialsystem.

4. Bauelement nach Anspruch 3,
g e k e n n z e i c h n e t   d u r c h
eine Differenz zwischen Bandabstand $E_g$ und Photonenenergie $E_{ph}$ zwischen 0,25 eV und 0,35 eV.

5. Bauelement nach Anspruch 3 oder 4,
g e k e n n z e i c h n e t   d u r c h
eine Mischkristallschicht $In_xGa_yAs_{1-y}P_{1-x}$ mit x = 0,0439 und y = 0,0968.

6. Bauelement nach einem der Ansprüche 3 bis 5,
g e k e n n z e i c h n e t   d u r c h
eine Doppel-Heterostruktur, bei der das Substrat
(001)-orientiert ist und die Lichtwellenausbreitung in
der transparenten Mischkristallschicht in der [110] -
Richtung liegt.

7. Verwendung eines Bauelements nach einem der Ansprüche 1 bis 6 als elektro-optischer Modulator.

0143070

1/2

Fig.1

Fig.2

Fig.3

Schottky-,pn-.

n-In$_x$Ga$_{1-x}$
As$_y$P$_{1-y}$

n$^+$-InP

[001] [110]

[1$\bar{1}$0]

F i g.4

**Europäisches Patentamt**

# EUROPÄISCHER RECHERCHENBERICHT

| | EINSCHLÄGIGE DOKUMENTE | | EP 84730109.0 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.4)** |
| D,A | APPLIED PHYSICS LETTERS, Vol. 42, No. 8, 15. April 1983<br><br>H.G. BACH et al. "Electro-optical light modulation in InGaAsP/InP double heterostructure diodes" Seiten 692-694<br><br>   * Gesamt *<br>      -- | 1-3,6, 7 | G 02 F  1/015<br><br>H 01 L 31/12<br><br>G 02 B  6/12 |
| A | IEEE JOURNAL OF QUANTUM ELECTRO-NICS, Vol. QE-19, No. 9, September 1983<br><br>R.H. KINGSTON et al. "Fourier Transformation Using an Electro-absorptive CCD Spatial Light Modulator" Seiten 1443-1451<br><br>   * Seiten 1443-1445; Seite 1449, Kap. V *<br>      -- | 1,2,7 | |
| | | | **RECHERCHIERTE SACHGEBIETE (Int. Cl.4)** |
| A | APPLIED PHYSICS LETTERS, Vol. 32, No. 8, 15. April 1978<br><br>J.C. CAMPBELL et al. "Buried heterojunction electroabsorption modulator" Seiten 471-473<br><br>   * Gesamt *<br>      -- | 1,2,7 | G 02 F  1/00<br>H 01 L 31/00<br>H 01 Q 15/00<br>H 01 P  3/00<br>H 03 C  7/00<br>G 02 B  6/00 |
| A | DE - A - 2 252 247 (WESTERN)<br><br>   * Fig. 1; Seite 2, 3. Absatz – Seite 4, letzte Zeile; Seite 7, Zeile 4 – Seite 10, letzte Zeile *<br>      -- | 1,2,7 | |

Der vorliegende Recherchenbericht wurde für alle Patentansprüche erstellt.

| Recherchenort | Abschlußdatum der Recherche | Prüfer |
|---|---|---|
| WIEN | 08-01-1985 | GRONAU |

Europäisches
Patentamt

**EUROPÄISCHER RECHERCHENBERICHT**

| | **EINSCHLÄGIGE DOKUMENTE** | | | EP 84730109.0 |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int. Cl.4) |
| A | <u>EP - A1 - 0 051 505</u> (THOMSON-CSF)<br>    * Fig. 1,2 *<br><br>                  ---- | | 1-3 | |
| | | | | RECHERCHIERTE SACHGEBIETE (Int. Cl.4) |
| | Der vorliegende Recherchenbericht wurde für alle Patentansprüche erstellt. | | | |

| Recherchenort | Abschlußdatum der Recherche | Prüfer |
|---|---|---|
| WIEN | 08-01-1985 | GRONAU |